(19) Europäisches Patentamt
European Patent Office
Office européen des brevets

(11) **EP 3 798 916 A1**

(12) **EUROPEAN PATENT APPLICATION**

(43) Date of publication:
**31.03.2021 Bulletin 2021/13**

(51) Int Cl.:
***G06N 3/04*** (2006.01)  ***G06N 3/08*** (2006.01)

(21) Application number: **19306185.0**

(22) Date of filing: **24.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ANOTHER BRAIN**
**75002 Paris (FR)**

(72) Inventors:
• **DEHAENE, David**
**75002 Paris (FR)**
• **FRIGO, Oriel**
**75002 Paris (FR)**
• **COMBREXELLE, Sébastien**
**75002 Paris (FR)**
• **ELINE, Pierre**
**75002 Paris (FR)**

(74) Representative: **Marks & Clerk France**
**Immeuble "Visium"**
**22, avenue Aristide Briand**
**94117 Arcueil Cedex (FR)**

(54) **TRANSFORMATION OF DATA SAMPLES TO NORMAL DATA**

(57)    The invention discloses a device comprising at least one processing logic configured for: obtaining an input vector representing an input data sample; until a stop criterion is met, performing successive iterations of: using an autoencoder trained using a set of reference vectors to encode the input vector into a compressed vector, and decode the compressed vector into a reconstructed vector; calculating a reconstruction loss between the reconstructed and the input vectors, and a gradient of the reconstruction loss; updating said input vector for the subsequent iteration using said gradient.

FIG.2

**Description**

FIELD OF THE INVENTION

The present invention relates to the field of management of normal and abnormal data. More specifically, it relates to the transformation of input samples to samples that are as close as possible to data considered as normal.

BACKGROUND PRIOR ART

The distinction between normal and abnormal data is a growing field of search that has a number of applications.

One of them is anomaly detection and localization. Its purpose is to detect automatically if a sample of data is "normal" of "abnormal", and, when an anomaly is detected, localize it. A concrete application of this is the detection, in a production line, of normal or abnormal products. This can be done by taking a picture of each product, and automatically detecting if the picture corresponds to a normal and abnormal product.

The automatic detection of what is "normal" and what is "abnormal" is a notoriously difficult problem, which has been addressed in different ways, which generally rely on learning and generating one or more data models.

A first approach to tackle this issue consists in performing supervised learning. Supervised learning consists in learning models from labeled input data: each learning sample is associated with a label indicating if the sample is normal and abnormal. Abnormal samples may also be associated with labels indicating a type of anomaly. Once the model is trained, it can be used to classify new samples either as normal or abnormal. The problem with such approaches is that the model can only learn anomalies which have already been encountered. Therefore, they present a strong risk that a sample which is abnormal, but whose anomaly has not been learnt previously will be classified as normal.

On the other hand, unsupervised learning can detect anomalies without needing labeled abnormal learning data. In order to do so, some solutions learn a generative model of the data using a set of learning sample representing normal data: the purpose of such a model is to output a sample that could be considered to be part of the original data distribution, given an input in some compressed data space. In image processing, typical values can be to generate 256*256 pixel images from a 64 dimensions compressed data space. Such models are mainly generative adversarial networks (GAN), variational auto encoders (VAE), PixelCNN, and hybrids of those models. Given a sample, to detect an anomaly, existing solutions encode the sample into their compressed data space, then decode the compressed representation to obtain a new, generated, sample that we call the "reconstruction". They also allow localizing the anomaly, by comparing the reconstruction to the input sample, for example pixel per pixel, or using more global filters, and considering that a zone of the sample that is different from the reconstruction is the localization of an anomaly.

However, the anomaly localization using such method remains uncertain. Indeed, as the anomaly, is, by nature, not part of the learning normal data, the reconstructed sample may be different from the abnormal input sample in many different places, not only at the exact localization of the abnormality.

There is therefore a need for a device and method to detect abnormal samples, and provide an accurate location of the anomalies. This is because the existing methods fail to really detect where the difference between the abnormal sample and a normal one lie.

Another application of use of normal/abnormal data is inpainting. Inpainting consists in reconstructing data which was masked in a picture, from the unmasked part of the picture. For example, this can be used to remove watermarking, or reconstruct a landscape beyond the forefront of an image.

In this case also, generative models can be used to reconstruct the missing parts of a picture, by encoding the unmasked parts of the features into a compressed space, and decoding the compressed image into a reconstructed image. However, the result of such method remains imperfect, because there remains a clear distinction between the parts of the image that were masked, that can be blurry, or of slightly different colors, and the other parts of the images. The existing methods therefore fail to reconstruct images that really "look like" an original image.

In these two examples the limitations of the existing methods come from the fact that they are generally unable to detect what exactly is the difference between an abnormal sample, and a normal one. Stated otherwise, they fail to accurately transform an abnormal sample into a normal one which is as close as possible to the abnormal sample.

Even though the examples provided above lie in the field of digital imaging, the same problems arise for other kinds of multimedia samples (e.g audio, video samples), and, more generally, any kind of meaning data samples such as physical measurements (temperature, humidity...), activity measurements of a computer (CPU, memory usage, network bandwidth...), etc.

There is therefore the need of a method and device which is able to provide a transform with the lowest possible impact of an abnormal data sample into a transformed data sample which is as close as possible of what a normal sample would be.

SUMMARY OF THE INVENTION

To this effect, the invention discloses a device comprising at least one processing logic configured for: obtaining an input vector representing an input data sample; until a stop criterion is met, performing successive iterations of: using an autoencoder previously trained using a set of reference vectors to encode the input vector into a compressed vector, and decode the compressed vector into a reconstructed vector; calculating an energy between the reconstructed and the input vectors, and a gradient of the energy; updating said input vector for the subsequent iteration using said gradient.

Advantageously, the autoencoder is a variational autoencoder.

Advantageously, the reconstruction loss of the autoencoder is calculated as

$$\mathcal{L}(x_t, \ \hat{x}_t) = \|x_t - \hat{x}_t\|^2 - D_{KL}\big(q(z_t|x_t), p(z_t)\big).$$

Advantageously, the energy is a weighted sum of: a loss function, or reconstruction loss of the autoencoder; a distance between the reconstructed sample and the input sample.

Advantageously, the updating of said input vector using said gradient consists in applying a gradient descent.

Advantageously, gradient is modified element-wise by a reconstruction error of the autoencoder.

Advantageously, the stop criterion is met when a predefined number of iterations is reached.

Advantageously, the stop criterion is met when: the energy is lower than a predefined threshold, or when the difference of the energy between two successive iterations is lower than a predefined threshold, for a predefined number of successive iterations.

Advantageously, the set of reference vectors represent normal samples, and wherein the processing logic is further configured to: determine if the input vector is a normal or an abnormal vector in view of the set of reference vectors; if the input vector is an abnormal vector, locate at least one anomaly using differences between the elements of the input vector for the first iteration, and the input vector for the last iteration.

Advantageously, the processing logic is configured to determine if the input vector is a normal or an abnormal vector in view of the set of reference vectors by comparing the distance between the input vector for the first iteration and the reconstructed vector for the first iteration to a threshold.

Advantageously, the processing logic is configured to determine if the input vector is a normal or an abnormal vector in view of the set of reference vectors by comparing a distance between the input vector for the first iteration, and the input vector for the last iteration to a threshold.

Advantageously, the set of reference vectors represent complete samples, the input sample represents an incomplete sample, and wherein the processing logic is further configured for: obtaining a mask of the missing parts of the input sample; in each iteration, multiply the gradient by the mask, prior to updating said input vector; when the stop criterion is met, outputting the input vector as iteratively updated.

The invention also discloses a computer-implemented method comprising: obtaining an input vector representing an input data sample; until a stop criterion is met, performing successive iterations of: using an autoencoder previously trained using a set of reference vectors to encode the input vector into a compressed vector, and decode the compressed vector into a reconstructed vector; calculating an energy between the reconstructed and the input vectors, and a gradient of the energy; updating said input vector for the subsequent iteration using said gradient.

The invention also discloses a computer program product comprising computer code instructions configured to: obtain an input vector representing an input data sample; until a stop criterion is met, perform successive iterations of: using an autoencoder previously trained using a set of reference vectors to encode the input vector into a compressed vector, and decode the compressed vector into a reconstructed vector; calculating an energy between the reconstructed and the input vectors, and a gradient of the energy; updating said input vector for the subsequent iteration using said gradient.

BRIEF DESCRIPTION OF THE DRAWINGS

The invention will be better understood and its various features and advantages will emerge from the following description of a number of exemplary embodiments provided for illustration purposes only and its appended figures in which:

- Figures 1a, 1b and 1c represent three examples of a device in a number of embodiments of the invention;
- Figure 2 represents an example of a method in a number of embodiments of the invention;
- Figure 3 represents an example of an autoencoder in a number of embodiments of the invention;
- Figure 4 represents an example of a method according to a number of embodiments of the invention, to perform anomaly detection and localization;
- Figures 5a and 5b represent two examples of comparisons of the output of an anomaly detection in an embodiment of the invention and the prior art;

- Figure 6 represents an example of a method of reconstruction of missing parts of a sample in a number of embodiments of the invention;
- Figure 7 represents an example of a comparison of the output of an inpainting task in an embodiment of the invention and the prior art.

DETAILED DESCRIPTION OF THE INVENTION

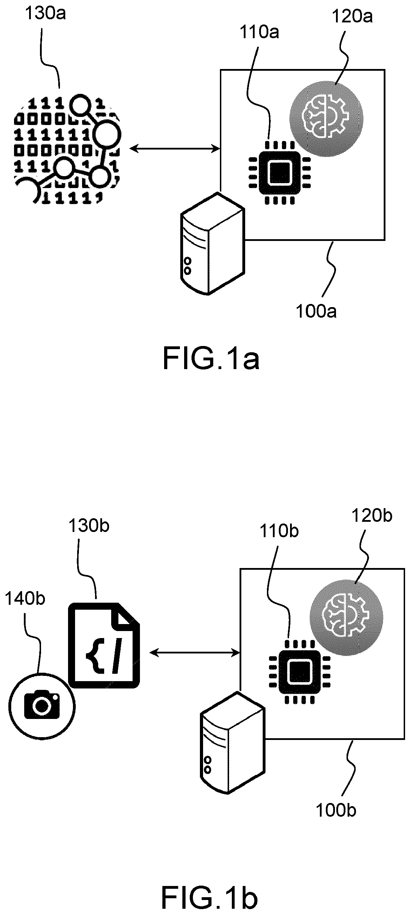

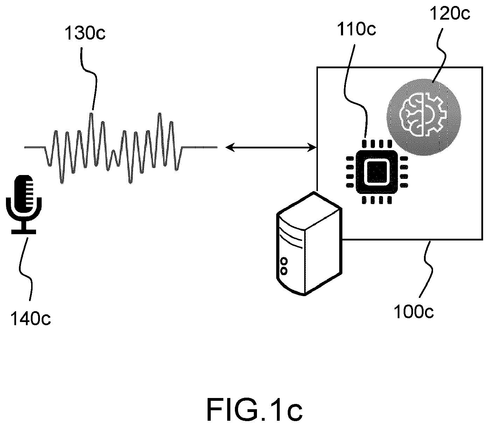

Figures 1a, 1b and 1c represent three examples of a device in a number of embodiments of the invention.

Figure 1a represents a first example of a device in a number of embodiments of the invention.

The device 100a is a computing device. Although represented in figure 1a as a computer, the device 100a may be any kind of device with computing capabilities such as a server, or a mobile device with computing capabilities such as a smartphone, tablet, laptop, or a computing device specifically tailored to accomplish a dedicated task.

The device 100a comprises at least one processing logic 110a. According to to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called "the processing logic". However, it should be noted that the operations of the invention may also be performed in a single processing logic, or a plurality of processing logics, for example a plurality of processors.

The processing logic 110a is configured to obtain an input vector representing an input data sample 130a. The input data sample may belong to various type of data samples representing meaningful data: it may be a multimedia sample (image, audio, video...), a sample of data from various sensors (temperature, pressure...), activity measurements of a computer (CPU, memory usage, network bandwidth...), or more generally any kind of data that is based on numbers that has a meaning. The input data sample may be obtained in various ways: it may be measured, retrieved through an internet connection, read in a database, etc. The sample can be transformed into an input vector in any suitable way.

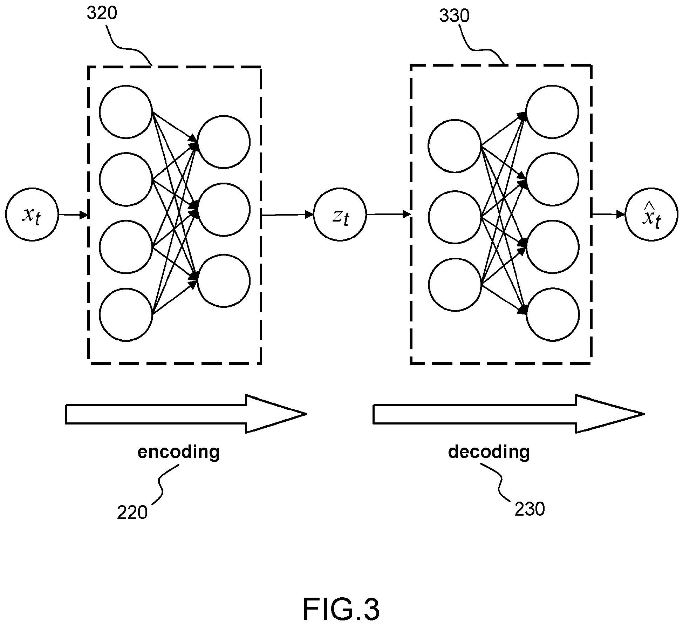

The processing logic 110a is configured to execute an autoencoder 120a. An autoencoder is a type of artificial neural network that consists in encoding samples to a representation, or encoding of lower dimension, then decoding the sample into a reconstructed sample, and is described for example in Liou, C. Y., Cheng, W. C., Liou, J. W., & Liou, D. R. (2014). Autoencoder for words. Neurocomputing, 139, 84-96. The principle of autoencoder is described in more details with reference to figure 3.

The autoencoder 120a has been previously trained with a set of reference vectors that represent normal samples of the same kind as the input sample. Therefore, the autoencoder is able to encode the input sample into a compressed sample, and decode the compressed vector into a reconstructed vector.

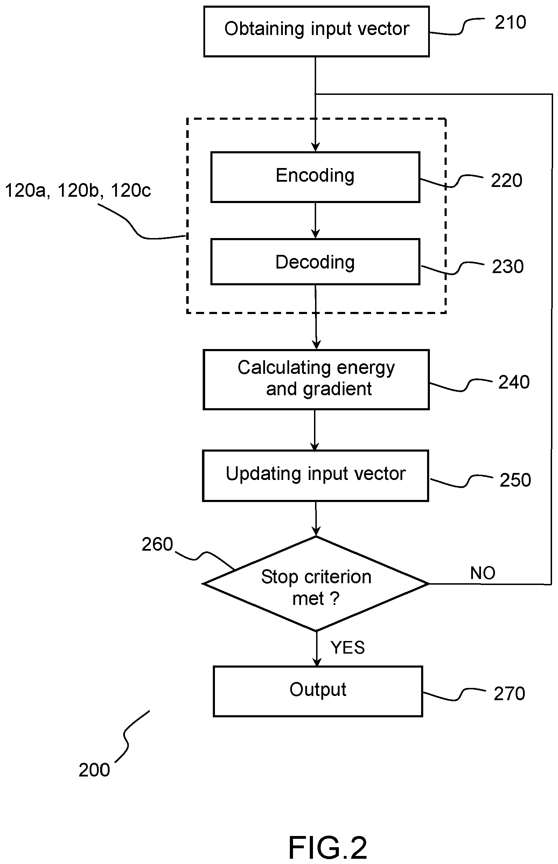

The processing logic 110a is configured to use the autoencoder 120a to transform the input vector 130a to a vector that looks like what a vector belonging to the set of reference vector would be. The operations performed therefore are explained with reference to the figure 2.

This serves a number of different purposes. For example, the device 100a can be used for anomaly detection and localization, anomaly correction, inpainting, input denoising, or more generally for any purpose that necessitates to detect or correct anomalies or differences between a vector and a set of reference vectors.

Figure 1b represents a second example of a device in a number of embodiments of the invention.

Like the device 100a, the device 100b comprises at least one processing logic 110b, configured to execute an autoencoder 120b.

The device 100b is specifically configured to perform image processing. The input vector of the device 100b therefore represents a digital image 130b. The digital image may be obtained from a variety of sources. For example, it may be captured by a digital camera 140b. Conversely, the autoencoder 120b has been trained using a set of reference images that are considered as normal images with respect to the intended use of the device.

The device 100b has a number of applications. It can for example be used to perform anomaly detection, anomaly localization in images, inpainting, watermarking removal, or more generally any kind of image processing that rely on transforming an input image to an image that is closer to what would be an image in the reference set.

The device 100b may therefore be a server that process images that are sent by user, a personal computer, or a portable device. For example, the device 100b may be a server in a factory that receives pictures of products at the output of production lines, and determines, based on the image, if the products are normal or not, and where lies the anomaly, if any, provided that the autoencoder 120b has been trained with pictures of normal products. It may also be a smartphone, or another portable computing device comprising a camera, that takes pictures of products and perform the same functions. It can thus be appreciated that each application of the invention may be embedded into very different computing devices, such as server, personal computer, smartphones or specific portable devices.

Figure 1c represents a second example of a device in a number of embodiments of the invention.

Like the device 100a, the device 100c comprises at least one processing logic 110c, configured to execute an autoencoder 120c.

The device 100c is specifically configured to perform sound processing. The input vector of the device 100c therefore represents a digital audio track 130c. The digital audio track may be obtained for a variety of sources. For example, it may be captured by a digital microphone 140c. It may also be retrieved from a storage (digital storage, CD, etc...) Conversely, the autoencoder 120c has been trained using a set of reference audio tracks that are considered as normal audio tracks with respect to the intended use of the device.

The device 100c has a number of applications. It can for example be used to perform anomaly detection, anomaly localization in sound, sound reconstruction, removal of unwanted sounds, or unwanted sound effects, or more generally any kind of sound processing that rely on transforming an input audio track to an audio track that is closer to what would be an audio track in the reference set.

The device 100c may therefore be a server that receives audio tracks with unwanted noise to remove. For example, if the autoencoder 120c has been trained with audio tracks representing classical piano without unwanted noise, the processing logic will be able, according to various applications of the invention, when receiving an audio track of classical piano with anomalies, to modify the input track to remove the anomalies. This can be done for example to reconstruct small missing parts of the track, or locate and remove unwanted noise. The device 100c may be different types of devices. For example, the device 100c may be a server. It may also be a smartphone, or another portable computing device comprising a digital microphone. It can thus be appreciated that each application of the invention may be embedded within very different computing devices, such as server, personal computer, smartphones or specific portable devices.

Figure 2 represents an example of a method in a number of embodiments of the invention.

The method 200 comprises a first step 210 of obtaining an input vector representative of an input data sample.

As noted above, the vector can be obtained depending upon the type of data which is considered. The input vector may thus represent an image, an audio track, a video series, temperature measurements, time series of CPU usage, or more generally any meaningful data that can be represented through numbers.

As will be described below in greater details, the method 200 comprises a plurality of iterations, wherein the input vector is compressed, reconstructed then modified. In the disclosure the iterations will be designated by an index $t = 1, 2, ...$ representing the number of the iteration, and, for each iteration of index t, the input vector is noted $x_t$, and the reconstructed vector $\hat{x}_t$.

It thus shall be noted that the term "input vector" will here generally designate the input vector as modified when serving as input for iteration t. The input vector as initially received at the first step 210, which thus serves as input vector at the first iteration, may thus be specifically designated by the term "initial input vector", or "input vector for the first iteration". This vector may also be noted $x_1$ or $x_{t=1}$. Indeed, in a number of embodiments of the invention, although the input vector is iteratively modified at each iteration t, the initial input vector $x_1$ is saved for future uses, as will be explained in more details below.

The method 200 then uses an autoencoder such as the autoencoder 120a, 120b or 120c. It thus comprises a second step 220 of encoding the input vector into a compressed vector, and a third step 230 of decoding the compressed vector into a reconstructed vector.

Figure 3 represents an example of an autoencoder in a number of embodiments of the invention.

Autoencoders have been described for example in Liou, Cheng-Yuan; Huang, Jau-Chi; Yang, Wen-Chie (2008). "Modeling word perception using the Elman network". Neurocomputing. 71 (16-18), and Liou, Cheng-Yuan; Cheng, Wei-Chen; Liou, Jiun-Wei; Liou, Daw-Ran (2014). "Autoencoder for words". Neurocomputing. 139: 84-96. Autoencoders are a type of neural networks which are trained to perform an efficient data coding in an unsupervised manner.

An autoencoder consists in a first neural network 320, that encodes the input vector $x_t$ into a compressed vector noted $z_t$ (t representing the index of the iteration), and a second neural network that decodes the compressed vector $z_t$ into a decompressed or reconstructed vector $\hat{x}_t$. The compressed vector $z_t$ has a lower dimensionality than the input vector $x_t$ and the reconstructed vector $\hat{x}_t$. It is expressed using a set of variables called latent variables, that are considered to represent essential features of the vector. Therefore, the reconstructed vector $\hat{x}_t$ is similar, but in general not strictly equal to the input vector $x_t$.

It is thus possible, at the output of the decoding, to compute both a reconstruction error, or loss function, and a gradient of the loss function.

The loss function is noted $\mathcal{L}(x_t, \hat{x}_t)$, and can be for example a quadratic function:

$$\mathcal{L}(x_t, \hat{x}_t) = \|x_t - \hat{x}_t\|^2$$

*(Equation 1)*

The gradient of the loss function can be noted $\nabla_{x_t}\mathcal{L}$.

The autoencoder has been previously trained, in a training phase, with a set of reference vectors. The training phase of an autoencoder consists in adapting the weights and biases of the neural networks 320 and 330, in order to minimize the reconstruction loss of for the training set. By doing so, the latent variables of the compressed vectors p are trained to represent the salient high-level features of the training set. Stated otherwise, the training phase of the auto-encoder provides an unsupervised learning of compressing the training samples into a low number of latent variables that best represent them.

Therefore, the training of the autoencoder with a training set of normal samples results in latent feature which are optimized to represent normal samples. Therefore, after the training phase, when the autoencoder encodes and decodes a normal sample, the compressed vector provides a good representation of the sample, and the reconstruction error is low. On the contrary, if the input vector represents an abnormal sample, or more generally a sample which is not similar to the samples of the training, set, the dissimilarities will not be properly compressed, and the reconstruction error will be much higher.

The training set of reference samples can thus be adapted to the intended training. For example:

- in an application to detect abnormal products from a picture of a given type of products, the training set should be composed of pictures of normal products;
- in an application to perform inpainting, the training set should be composed of complete images;
- in an application to remove unwanted noise from sound, the training set should be composed of sound without unwanted noise;
- in an application to reconstruct missing parts of temperature measurements, the training set should be composed of temperature measurements without missing measurements.

It should be noted that, although the invention works with a training set which is generally suited to the intended purpose, the results can be further improved by selecting training samples which are as representative as possible to the samples to process. For example:

- in an application to detect abnormal products in a production line of glass bottles, a training set with normal glass bottles (i.e glass bottles without defects) will generally work, but a training set with glass bottles of the exact same model from the same manufacturer is expected to provide even better results;
- in an application to perform inpainting in faces, a training set composed of complete pictures will generally work, but a training set of images of faces will provide better results;
- in an application to remove unwanted noise from classical piano records, a training set composed of audio tracks without noise will generally work, but a training set composed of classical piano records will provide better results;
- in an application to reconstruct missing parts of temperature measurements, a training set composed of complete temperature measurements will generally work, but a training set composed of complete temperature measurements captured in the same place, and/or in the same conditions, and/or or by the same kind of thermometer than the input samples is expected to provide better results.

The skilled man could thus select the training set that best suits its need according to the intended application. However, the input vector and vectors of the training set need to be of the same type, that is to say have the same dimension, and the corresponding elements of the vectors need to have the same meaning. For example, the input vectors, and vectors of the training set may represent images of the same dimension with the same color representation and bit depth, audio tracks of the same duration, with the same bit depth, etc.

In a number of embodiments of the invention, the autoencoder is a variational autoencoder (VAE). The variational autoencoders are described for example by Kingma,, D. P., & Welling, M. (2013). Auto-encoding variational bayes. arXiv preprint arXiv:1312.6114, or Diederik P. Kingma and Volodymyr Kuleshov. Stochastic Gradient Variational Bayes and the Variational Autoencoder. In ICLR, pp. 1-4, 2014. The variational auto-encoder advantageously provides a very good discrimination of normal and abnormal samples on certain datasets. The invention is however not restricted to this type of autoencoder, and other types of autoencoder may be used in the course of the invention.

In a number of embodiments of the invention, the loss of the variational auto encoder is calculated as:

$$\mathcal{L}(x_t, \hat{x}_t) = \|x_t - \hat{x}_t\|^2 - D_{KL}\big(q(z_t|x_t), p(z_t)\big).$$

*(Equation 2)*

This function allows ensuring a generative model is used, that is to say that the model is able to produce samples that have never been used for training.

In the VAE, a decoder model tries to approximate the dataset distribution with a simple latent variables prior p(z), with $z \in \mathbb{R}^l$, and conditional distributions output by the decoder p(x|z).. This leads to the estimate p(x) = ∫p(x|z)p(z)dz that we would like to optimize using maximum likelihood estimation on the dataset. To render the learning tractable with a stochastic gradient descent (SGD) estimator with reasonable variance it is possible to use importance sampling, introducing density functions q(z|x) output by an encoder network, and Jensen's inequality to get the variational lower bound:

$$\log p(\mathrm{x}) = \log \mathbb{E}_{z \sim q(z|x)} \frac{p(\mathrm{x}|\mathrm{z})p(\mathrm{z})}{q(\mathrm{z}|\mathrm{x})} \geq \mathbb{E}_{z \sim q(z|x)} \log p(\mathrm{x}|\mathrm{z}) - D_{\mathrm{KL}}\big(q(\mathrm{z}|\mathrm{x}) \| p(\mathrm{z})\big)$$

*(Equation 3)*

The reconstruction of the VAE can thus be defined as the deterministic sample $f_{VAE}(x)$ obtained by encoding x, decoding the mean of the encoded distribution q(z|x), and taking again the mean of the decoded distribution p(x|z).

In order to produce more detailed reconstructions, it is possible to learn the variance of the decoded distribution p(x|z) as proposed by Bin Dai and David P. Wipf. Diagnosing and enhancing VAE models. CoRR, abs/1903.05789, 2019.

Coming back to figure 2, the method 200 further comprises a fourth step 240 of calculating an energy between the reconstructed vector $\hat{x}_t$, and the input vector $x_t$, and the gradient of the energy with respect to the input vector.

In number of embodiments of the invention, the loss or energy function is a weighted sum of two terms:

- a first term which is the loss function of the autoencoder, or the reconstruction error of the autoencoder;
- a second term which is a distance between the input sample and the initial input sample. The distance may be dependent upon the type of vectors, and may for example be a DSSIM or a L1 error if the vectors represent images.

This allows reducing both the loss function of the autoencoder, and a distance which is dependent upon an objective relative to the type of vectors considered (i.e the use of a DSSIM will reduce the global level of dissimilarity, while the use of a L1 distance will reduce the number of different pixels, for example.

The Energy can thus be noted $E(x_t)$, or $E(x_t, \hat{x}_t)$ expressed as:

$$E(\mathrm{x}_t) = \mathcal{L}(\mathrm{x}_t) + \lambda \cdot \mathcal{D}(\mathrm{x}_t, \mathrm{x}_1)$$

*(Equation 4)*

Wherein:

- $\mathcal{L}(x_t)$ represents the loss of the autoencoder for the input vector $x_t$ at step t;
- $\lambda$ is a regularization term;
- $\mathcal{D}(\mathrm{x}_t, \mathrm{x}_1)$ is a distance between the input vector at step t, and the initial input vector $x_1$. The gradient of the Energy can thus be noted;

$$\nabla_{x_t}(x_t, \hat{x}_t)$$

*(Equation 5)*

The value of the regularization term $\lambda$ can provide a tradeoff between the reduction of the loss of the autoencoder (which depends of the distance between the input vector $x_t$ at step t, and the reference vectors), and the reduction of the distance between the input vector $x_t$ at step t, and the initial input vector $x_0$. The regularization term $\lambda$ can have various values, and can even be 0 in some embodiments of the invention - in such case, the energy will be equal to the loss of the autoencoder The regularization term $\lambda$ can for example be equal to 0,01 or 0,1.

According to various embodiments of the invention, different distances may be used. The distance may depend upon the vector type - an image distance metrics for image vectors, audio distance metrics for audio track vectors, etc.

For example, the distance can be a Structural DiSIMilarity (DSSIM). The energy is in such case expressed as:

$$E(x_t) = \mathcal{L}(x_t) + \lambda \cdot D_{SSIM}(x_t, x_1)$$

*(Equation 6)*

According to various embodiments of the invention, different reconstruction losses and gradients may be used. As noted above, if the autoencoder is a variational autoencoder, the reconstruction loss can be calculated as:

$$\mathcal{L}(x_t, \hat{x}_t) = \|x_t - \hat{x}_t\|^2 - D_{KL}\big(q(z_t|x_t), p(z_t)\big).$$

*(Equation 7)*

Although not mandatory, the loss of the autoencoder $\mathcal{L}(x_t, \hat{x}_t)$ may be the same as the loss used in the training phase, in order to provide results that are as consistent as possible between the training phase and the modification of the input vector.

The method 200 further comprises a fifth step 250 of updating the input vector using the gradient. The update based on the gradient allows modifying, at each iteration, the vector to a vector which is closer to the vector of the training set. For example, if the vectors of the training set represent pictures of normal products, and the initial input vector represents a picture of a faulty product, the use of the gradient to modify the input vector at the next iteration allows to progressively "eliminate" the anomalies from the input vector. Similarly, in an inpainting task, the modification of the input vector at each iteration allows progressively reconstructing the missing parts of the image.

In a number of embodiments of the invention, a gradient descent can be applied by defining the input vector at step t+1 as the input vector at step t minus the gradient at step t multiplied by a positive factor α:

$$x_{t+1} = x_t - \alpha \nabla_{x_t} E(x_t, \hat{x}_t)$$

*(Equation 8)*

The gradient descent provides an efficient solution to iteratively converge to an input vector that minimizes the energy, that is to say an input vector which will be both properly compressed by the auto-encoder, and thus as similar as possible to the vectors of the training set, while limiting the distance from the input vector, the tradeoff between these two elements being defined by the regularization term $\lambda$. In this sense, the iterations of the method 200 find a local minimum, starting from the input vector at t=1, of the energy. All this allows obtaining, at the end of the iterations, a vector from which the dissimilarities with the vectors of the training set have been removed.

The value of the factor α may modify the conversion rate of the method. For example, values of α equal to 0,05 or 0,005 have for example been found as particularly effective.

In a number of embodiments of the invention, the gradient of energy is multiplied element-wise by the reconstruction error of the autoencoder for updating. The update can thus be expressed as:

$$x_{t+1} = x_t - \alpha \left(\nabla_{x_t} E(x_t) \odot (x_t - \hat{x}_t)^2\right)$$

*(Equation 9)*

Wherein $\odot$ is the Hadamard product.

This speeds up the update of the input vector, while preventing changes of input elements of the vectors that have a good reconstruction. Therefore, this allows reducing the number of iterations necessary to obtain a good input vector. The diminution of the number of iterations speeds up the calculation, and reduces the computational resources needed to execute the method. This also allows higher values of α, such as 0,05 or 0,5, and thus a faster convergence.

After the update step 250, a stop criterion is verified at step 260. If the stop criterion is not met, a new iteration of steps 220, 230, 240, 250 is performed, taking into input the updated vector $x_{t+1}$ at the output of step 250.

According to various embodiments of the invention, the stop criterion may be of different types.

For example, the stop criterion may be met after a predefined number of iterations. For example, it may be met when t = 100, t = 200, etc.... The predefined number can be selected as to ensure that the input vector will be close enough to a local minimum of the energy.

The stop criterion may also be met as a function of the energy. This allows ensuring that the vector at the end of the iterations is sufficiently similar to the training set. For example, the stop criterion may be a comparison of the energy to a predefined threshold: the criterion is met if the reconstruction at the end of the iteration is below the threshold, and thus if the input vector is sufficiently similar to the vectors of the training set while, depending on the regularization term not being too dissimilar from the initial input vector.

Another option consists in calculating the difference between the energy between the iterations t and t-1, the stop criterion being met if the difference is below a threshold, for a single iteration, or few successive iterations. This allows stopping the iterations, when the iterations stop significantly modifying the input vector.

When the stop criterion is met, the method 200 comprises an output step 270. a number N of iterations have been performed. The output of the method 200 is then the vector $x_N$, that is to say the input vector that has been iteratively modified. Alternatively, the output of the method can be the vector $x_{N+1}$, that is to say the vector that would have been the input of a further iteration.

As already noted above, the steps of the method 200 allow modifying an initial input vector to a local minimum of the energy, that is to say removing the elements of the input vector which are poorly encoded and decoded by the autoencoder as trained by the training set while performing a limited modification of the input vector. This allows removing from the input vectors only the elements that are poorly encoded by the autoencoder, to obtain as output a vector that has a low distance from the vectors of the training set of the autoencoder.

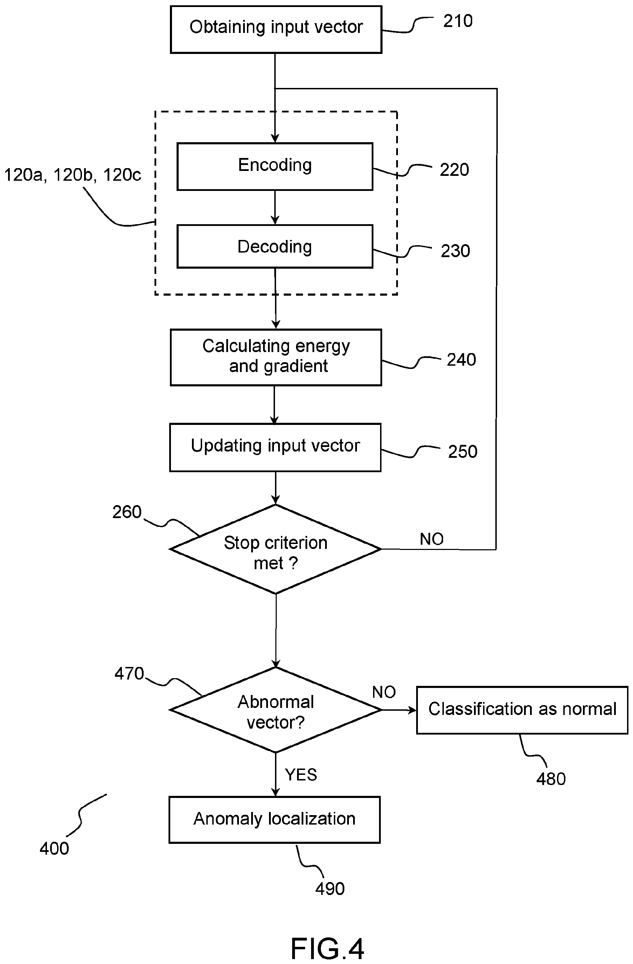

Figure 4 represents an example of a method according to a number of embodiments of the invention, to perform anomaly detection and localization.

Here the set of reference vectors represent normal samples. For example, if the method 400 is intended to determine if a product is normal or not based on a picture of the product, the set of reference samples will be formed of images of normal products of the same kind.

The method 400 comprises all the steps of the method 200. As noted above, the output of the steps of the method 200 is the input vector $x_N$ as modified by N-1 iterations of steps 220, 230, 240, 250, or the input vector $x_{N+1}$ as modified by N iterations.

The method 400 comprises a first additional step 470 of determining if the input vector is a normal or an abnormal vector. This can be performed using any suitable anomaly detection technique.

For example, the reconstitution loss at the first iteration $\mathcal{L}(x_1, \hat{x}_1)$ can be compared to a threshold depending upon the reconstruction loss of vectors of the training set: if it is significantly higher than the reconstruction losses of the reference vectors, the vector will be considered as abnormal. This solution is well suited for unsupervised anomaly detection using autoencoder. It is however provided by means of example only, and any suitable method can be used to detect whether the input vector is normal or abnormal. More generally, a distance between the input and the reconstructed vector at the first iteration can be calculated and compared to a threshold. This test can be expressed as:

$$A(x) = \begin{cases} 1 \text{ if } \mathcal{L}(x) \geq T \\ 0 \text{ otherwise} \end{cases}$$

*(Equation 10)*

Another option consists in comparing the initial input vector $x_1$, and the input vector for the last iterations, which may be either $x_N$, or $x_{N+1}$: if $x_N$, or $x_{N+1}$ is very different from $x_1$, it means that the vector has been modified a lot to be similar to the reference vectors, which indicates that the input vector is an abnormal one. This can be performed by comparing an indicator of distance to a threshold. The indicator of distance may be a generic indicator such as Euclidian distance, or depend upon the type of vector. For example a PSNR or SSIM may be used for image vectors. This allows tailoring the anomaly test to the type of vectors which is tested.

If the condition of normality of the vector is fulfilled, the corresponding sample will be classified as normal at step 480.

Otherwise, the vector is classified as abnormal, and a step 490 is performed to locate at least one anomaly. The anomaly detection is based on differences between the initial input vector (i.e input vector for the first iteration, as initially received) $x_1$), and the input vector for the last iterations, which may be either $x_N$, or $x_{N+1}$ according to various embodiments of the invention.

Indeed, these differences indicate the elements of the vector that has been modified to transform the initial input vector $x_1$ to a vector $x_N$, or $x_{N+1}$ which is more similar to the reference vectors. Therefore, high differences between corresponding elements of the vectors $x_1$, and $x_N$, or $x_{N+1}$ indicate that an anomaly is present at these elements.

Provided that the steps of the method 200 provided an accurate and localized modification of the elements of the vector to be more consistent with the reference vectors, the differences between and $x_N$, or $x_{N+1}$ provide a very accurate indication of the localization of errors.

This allows detecting errors for various types of vectors: for example regions of an image, times of an audio track, etc.

If the vectors are image vectors, the anomalies can be detected by calculating a DSSIM (Structural DiSIMilarity), and determining the pixels for which the DSSIM exceeds a predefined threshold, that are deemed to be the locations of the anomalies.

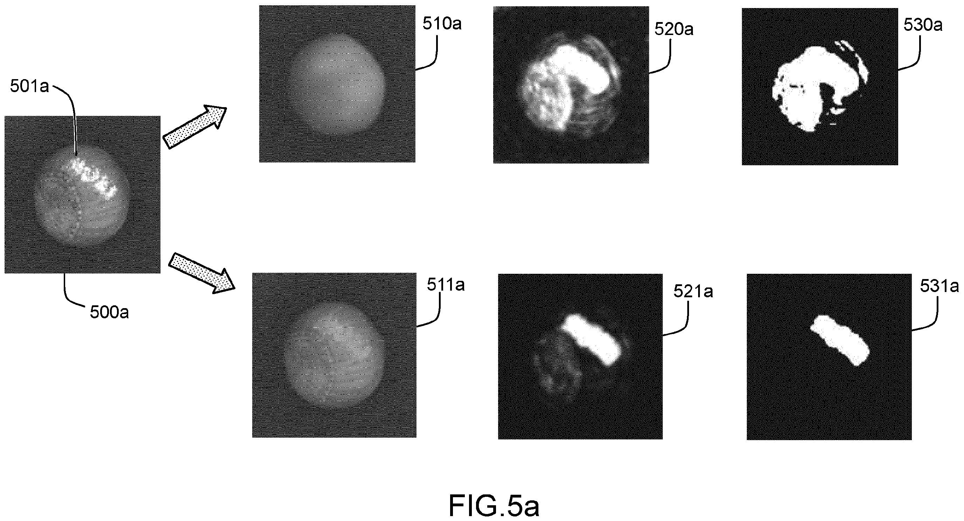

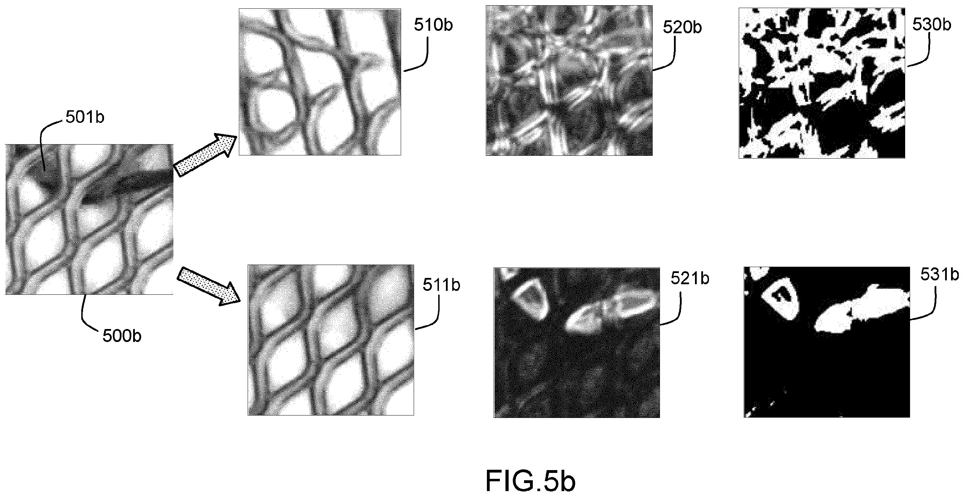

Figures 5a and 5b represent two examples of comparisons of the output of an anomaly detection in an embodiment of the invention and the prior art.

The pictures 500a and 500b represent respectively a hazelnut and a texture. The images come from the dataset provided by Bergmann, P., Fauser, M., Sattlegger, D., & Steger, C. (2019). MVTec AD--A Comprehensive Real-World Dataset for Unsupervised Anomaly Detection. In Proceedings of the IEEE Conference on Computer Vision and Pattern Recognition (pp. 9592-9600). Compared to the references, the hazelnut is abnormal because of the white signs 501a, and the texture because of the dark part 501b. In all cases, the anomaly detection and localization rely on a variational autoencoder (VAE) trained on reference samples representative of normal pictures (respectively normal hazelnuts, normal textures).

In prior art systems, the anomaly can be detected and located by:

- encoding and decoding the picture 500a using the trained VAE. The output of the decoding are the pictures 510a and 510b respectively;
- calculating the DSSIM between the reconstructed and the input picture: respectively DSSIM 520a between pictures 510a and 500a, and DSSIM 520b between pictures 510b and 500b;
- thresholding pixel by pixel the DSSIM to locate the anomalies at pixels wherein the DSSIM exceeds a predefined thresholds. The anomalies are located in the light parts of pictures 530a and 530b.

In an embodiment of the invention, the anomaly detection and localization is similar to the prior art approach, except that the pictures 510a, and 510b are replaced by pictures 511a, 511b, which correspond to the input vector modified by the method 200 (vector $x_N$, or $x_{N+1}$). Then the DSSIM 521a, 521b is calculated between the initial input vector $x_N$, and the modified input vector $x_N$, or $x_{N+1}$, then the DSSIM 521a, 521b is thresholded pixel by pixel to locate the anomalies 531a, 531b.

These examples show that the invention provides a much more precise localization of anomaly. This is because the method 200 results in a picture 511a, 511b wherein the anomaly has been removed by the method 200 in a way much more precise than in prior art methods 510a, 510b;

- Thus, the pixel-wise DSSIM 521a, 521b has high values only at locations of anomalies, while it has much more diffuse values in prior art systems 520a, 520b;
- Using the invention, the thresholded DSSIM therefore keeps only pixels where the anomaly is located 531a, 531b, while in prior art systems it keeps many other pixels, wherein the DSSIM is also high, therefore resulting in a poorer anomaly localization.

These examples demonstrate that the invention improves the accuracy of anomaly detection and localization. Although the examples are provided with reference to image anomaly detection and localization, similar results can be obtained on other kinds of inputs such as audio tracks, or temperature measurements.

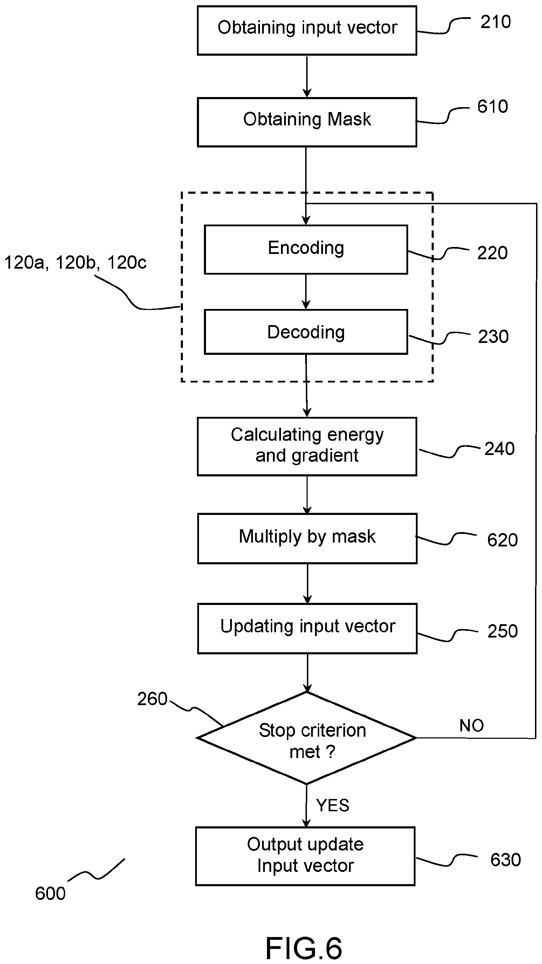

Figure 6 represents an example of a method of reconstruction of missing parts of a sample in a number of embodiments of the invention.

In a number of embodiments, the invention can be used to reconstruct missing data in samples. This may for example be the case for inpainting tasks, wherein some parts of a picture are missing, but also tasks for reconstructing missing parts of an audio recording, temperature measurements, etc. This may also be used to "remove" certain parts of a sample. For example, this method may be used to remove watermarking in a picture and replace it by the parts that were masked by the watermarking, or similarly remove elements the foreground of an image and reconstruct the hidden background.

In the method 600, the set of reference vector represents complete samples, and the input vector represents an incomplete sample. For example, the reference vectors can represent complete faces, while the input vector comprises elements to reconstruct (for example the mask of an inpainting task, pixels representing a foreground to replace by a reconstructed background, etc...). More generally, the method 600 is applicable to input vectors of the same type than the reference vectors, wherein the reference vectors represent complete data, and the input vector incomplete data.

To this effect, the method 400 comprises, in addition of the steps of the method 200, a step 610 of obtaining a mask that indicates the elements of the input vector to reconstruct. The mask can be expressed in different ways. For example, it can be a vector of the same dimension that indicates, for each element of the input vector, if it is an element to reconstruct or not. For example, the mask can be formed of zeros and ones, with a value "1" for each element to reconstruct, and "0" for each element which shall not be modified.

At the output of the step 240, and prior to the update of the input vector at step 250, the method 600 comprises a step 620 of multiplying the gradient by the mask. Thus, the updated gradient comprises null values for each element of the input vector which is not to be reconstructed, and the value of the gradient is preserved for each element of the input vector to reconstruct.

Thus, when the input vector is updated at step 250, only the elements to reconstruct are modified. Therefore, upon successive iterations, the elements to reconstruct are progressively modified, so that the overall vectors resembles more the reference vectors, which results in automatically reconstructing what the elements would be according to the reference vectors.

When the stop criterion is met, the input vector, as updated over successive iteration is outputted at step 230. The outputted vector is therefore a vector wherein the missing parts have been reconstructed.

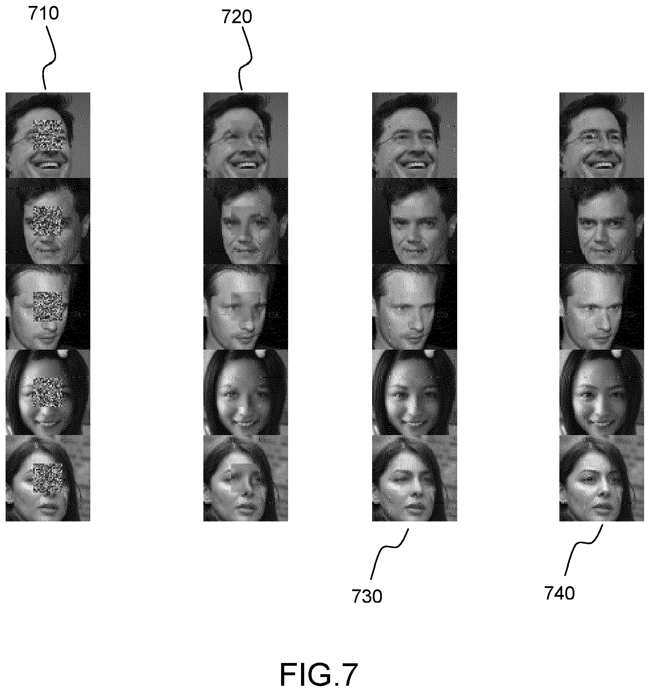

Figure 7 represents an example of a comparison of the output of an inpainting task in an embodiment of the invention and the prior art.

The faces 710 represent the corrupted faces with missing parts.

The faces 720 are the corresponding faces, reconstructed by a prior art method using variational autoencoders.

The faces 730 are the corresponding faces reconstructed by the method 600 according to the invention.

The faces 740 are the original faces, before corruption.

As can be seen in figure 7, the method 700 provides a much cleaner reproduction of faces. While the corrupted part remains apparent in prior art method, the invention provides a much more natural result.

This example demonstrates the ability of the invention to obtain good results in inpainting, and more generally reconstruction tasks.

The examples described above are given as non-limitative illustrations of embodiments of the invention. They do not in any way limit the scope of the invention which is defined by the following claims.

**Claims**

1. A device (100a, 100b, 100c) comprising at least one processing logic (110a, 110b, 110c) configured for:

   - obtaining (210) an input vector ($x$,$x_{t=1}$) representing an input data sample (130a, 130b, 130c);
   - until a stop criterion (260) is met, performing successive iterations (t = 1, ... N) of:

     ○ using an autoencoder (120a, 120b, 120c) previously trained using a set of reference vectors to encode (220) the input vector ($x_t$) into a compressed vector, and decode (230) the compressed vector into a reconstructed vector ($\hat{x}_t$);
     ○ calculating (240) an energy between the reconstructed and the input vectors, and a gradient of the energy;
     ○ updating (250) said input vector for the subsequent iteration ($x_{t+1}$) using said gradient.

2. The device of claim 1, wherein the autoencoder is a variational autoencoder.

3. The device of one of claim 1 or 2, wherein the reconstruction loss of the autoencoder is calculated as

$$\mathcal{L}(x_t, \hat{x}_t) = \|x_t - \hat{x}_t\|^2 - D_{KL}\big(q(z_t|x_t), p(z_t)\big).$$

4. The device of one of claims 1 to 3, wherein the energy is a weighted sum of:

   - a loss function, or reconstruction loss of the autoencoder;
   - a distance between the reconstructed sample and the input sample.

5. The device of one of claims 1 to 4, wherein the updating of said input vector using said gradient consists in applying a gradient descent.

6. The device of claim 5, wherein the gradient is modified element-wise by a reconstruction error of the autoencoder.

**7.** The device of one of claims 1 to 6, wherein the stop criterion is met when a predefined number of iterations is reached.

**8.** The device of one of claims 1 to 7, wherein the stop criterion is met when:

- the energy is lower than a predefined threshold, or when
- the difference of the energy between two successive iterations is lower than a predefined threshold, for a predefined number of successive iterations.

**9.** The device of one of claims 1 to 8, wherein the set of reference vectors represent normal samples, and wherein the processing logic is further configured to:

- determine (470) if the input vector $(x, x_{t=1})$ is a normal or an abnormal vector in view of the set of reference vectors;
- if the input vector is an abnormal vector, locate (490) at least one anomaly using differences between the elements of the input vector for the first iteration $(x, x_{t=1})$, and the input vector for the last iteration $(x, x_N \text{ or } x_{N+1})$.

**10.** The device of claim 9, wherein the processing logic is configured to determine if the input vector is a normal or an abnormal vector in view of the set of reference vectors by comparing the distance between the input vector $(x_1)$ for the first iteration and the reconstructed vector $(\hat{x}_1)$ for the first iteration to a threshold.

**11.** The device of claim 9, wherein the processing logic is configured to determine if the input vector is a normal or an abnormal vector in view of the set of reference vectors by comparing a distance between the input vector for the first iteration $(x, x_1)$, and the input vector for the last iteration $(x, x_N \text{ or } x_{N+1})$ to a threshold.

**12.** The device of one of claims 1 to 8, wherein the set of reference vectors represent complete samples, the input sample represents an incomplete sample, and wherein the processing logic is further configured for:

- obtaining (610) a mask of the missing parts of the input sample;
- in each iteration, multiply (620) the gradient by the mask, prior to updating said input vector;
- when the stop criterion is met, outputting (630) the input vector as iteratively updated.

**13.** A computer- implemented method comprising:

- obtaining (210) an input vector $(x, x_{t=1})$ representing an input data sample (130a, 130b, 130c);
- until a stop criterion (260) is met, performing successive iterations (t = 1, ... N) of:

  ◦ using an autoencoder (120a, 120b, 120c) previously trained using a set of reference vectors to encode (220) the input vector $(x_t)$ into a compressed vector, and decode (230) the compressed vector into a reconstructed vector $(\hat{x}_t)$;
  ◦ calculating (240) an energy between the reconstructed and the input vectors, and a gradient of the energy;
  ◦ updating (250) said input vector for the subsequent iteration $(x_{t+1})$ using said gradient.

**14.** A computer program product comprising computer code instructions configured to:

- obtain an input vector representing an input data sample;
- until a stop criterion is met, perform successive iterations of:

  ◦ using an autoencoder previously trained using a set of reference vectors to encode the input vector into a compressed vector, and decode the compressed vector into a reconstructed vector;
  ◦ calculating an energy between the reconstructed and the input vectors, and a gradient of the energy;
  ◦ updating said input vector for the subsequent iteration using said gradient.

130a    110a    120a

100a

FIG.1a

140b    130b    110b    120b

100b

FIG.1b

FIG.1c

**FIG.2**

FIG.3

FIG.4

FIG.5a

FIG.5b

FIG.6

FIG.7

Europäisches
Patentamt

European
Patent Office

Office européen
des brevets

## EUROPEAN SEARCH REPORT

Application Number

EP 19 30 6185

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAMIRO D CAMINO ET AL: "Improving Missing Data Imputation with Deep Generative Models", ARXIV.ORG, CORNELL UNIVERSITY LIBRARY, 201 OLIN LIBRARY CORNELL UNIVERSITY ITHACA, NY 14853, 27 February 2019 (2019-02-27), XP081034379, * abstract; figures 1-4 * * page 2, left-hand column, paragraph 1 - page 7, left-hand column, paragraph 4 * | 1-14 | INV. G06N3/04 G06N3/08 |
| A | RAVI KIRAN B ET AL: "An overview of deep learning based methods for unsupervised and semi-supervised anomaly detection in videos", ARXIV.ORG, CORNELL UNIVERSITY LIBRARY, 201 OLIN LIBRARY CORNELL UNIVERSITY ITHACA, NY 14853, 9 January 2018 (2018-01-09), XP081205218, * abstract; figures 1-10 * * page 9, right-hand column * | 1-13 | |
| A | JATESIKTAT PRAYOOK ET AL: "Unsupervised Phase Extraction Using Dual Autoencoder", 2017 INTERNATIONAL CONFERENCE ON ADVANCED COMPUTING AND APPLICATIONS (ACOMP), IEEE, 29 November 2017 (2017-11-29), pages 71-76, XP033364286, DOI: 10.1109/ACOMP.2017.15 [retrieved on 2018-06-21] * abstract; figures 1-6 * * page 74, left-hand column * | 1-13 | TECHNICAL FIELDS SEARCHED (IPC) G06N |

The present search report has been drawn up for all claims

| Place of search | Date of completion of the search | Examiner |
|---|---|---|
| The Hague | 5 March 2020 | Freitas, Arthur |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIOU, C. Y. ; CHENG, W. C. ; LIOU, J. W. ; LIOU, D. R.** Autoencoder for words. *Neurocomputing,* 2014, vol. 139, 84-96
- **LIOU, CHENG-YUAN ; HUANG, JAU-CHI ; YANG, WEN-CHIE.** Modeling word perception using the Elman network. *Neurocomputing,* 2008, vol. 71 (16-18
- **LIOU, CHENG-YUAN ; CHENG, WEI-CHEN ; LIOU, JIUN-WEI ; LIOU, DAW-RAN.** Autoencoder for words. *Neurocomputing,* 2014, vol. 139, 84-96
- **KINGMA,, D. P. ; WELLING, M.** *Auto-encoding variational bayes,* 2013
- **DIEDERIK P. KINGMA ; VOLODYMYR KULESHOV.** Stochastic Gradient Variational Bayes and the Variational Autoencoder. *ICLR,* 2014, 1-4
- **BIN DAI ; DAVID P. WIPF.** Diagnosing and enhancing VAE models. CoRR, 2019
- **BERGMANN, P. ; FAUSER, M. ; SATTLEGGER, D. ; STEGER, C.** MVTec AD--A Comprehensive Real-World Dataset for Unsupervised Anomaly Detection. *Proceedings of the IEEE Conference on Computer Vision and Pattern Recognition,* 2019, 9592-9600